# EUROPEAN PATENT APPLICATION

(11) **EP 4 640 483 A1**
(43) Date of publication of application: **29.10.2025**
(21) Application number: 24171735.4
(22) Date of filing: 22.04.2024
(51) Int. Cl.: B60N 2/28, B60N 2/42

(54) **CHILD SEAT AND SIDE IMPACT PROTECTION DEVICE FOR A CHILD SEAT**

(71) Applicant: Thule Sweden AB, 335 04 Hillerstorp (SE)
(72) Inventor: BETMARK, Peter, Malmö (SE); HÉLAOUI, Samir, Malmö (SE); OLSSON, Jon, Jönköping (SE)
(74) Representative: Wallentin, Lars

(57) **Abstract**

Disclosed is a child seat for a motor vehicle. The child seat comprises a receiving portion configured to couple to a side impact protection device. Furthermore, the child seat comprises a locking mechanism transferable between a first configuration in which the locking mechanism blocks a detachment of a side impact protection device inserted in or on the receiving portion, and a second configuration in which the side impact protection device can be disengaged from the receiving portion. Further disclosed is a side impact protection device.

## Description

### FIELD

The present disclosure relates to side impact protection in child seats, in particular to a side impact protection device for a child seat and to a child seat.

### BACKGROUND

Child seats for passenger cars are known in the art. Such child seats have to meet high demands regarding child safety.

It is known to add side impact protection devices on child seats to reduce forces acting on a seated child in a side crash. Such side impact protection devices are often cumbersome to mount for a user.

Furthermore, there is a need for improved side impact protection devices that reduce the impact forces transferred to the child seat as good as possible.

### SUMMARY

The present disclosure relates to improvements of side impact protection systems for child seats. In particular, the present disclosure relates to improvements in side impact protection devices for child seats and to improvements in child seats.

It is an object to provide an enhanced child seat and an improved side impact protection device for a child seat.

The object is solved by the configurations as presented in the claims, aspects and example configurations, examples and embodiments as described herein.

Advantageous further formations may be gleaned from the dependent claims and from the below description.

According to an aspect, a child seat for a motor vehicle is provided. The child seat comprises a receiving portion. The receiving portion is configured to couple to a side impact protection device. The receiving portion may be configured to receive the side impact protection device. For example, the receiving portion may be configured to couple to a side impact protection device in a positive mechanical locking manner. The receiving portion may be configured to interlock with the side impact protection device. Such an interlocking may be established with a portion of the side impact protection device engaging with a recess or opening in the receiving portion or may be established with a portion of the receiving portion engaging with a recess or opening in the side impact protection device. The receiving portion may be provided on an outer lateral side of a seat body of the child seat. The receiving portion may be configured such that the side impact protection device can be hooked into the same.

The child seat further comprises a locking mechanism which is transferable between a first configuration and a second configuration. In the first configuration, the locking mechanism blocks a detachment of the side impact protection device inserted in or on the receiving portion. In the second configuration, the side impact protection device can be disengaged from the receiving portion. Accordingly, the first configuration can be referred to as locking configuration and the second configuration may be referred to as a release configuration. In general, the child seat may be configured such that the locking mechanism and any portion for operating or releasing of the locking mechanism is provided on the child seat. Accordingly, the side impact protection device does not have to comprise any movable parts of mechanisms for locking and unlocking the side impact protection device to or from the receiving portion. In this way, the side impact protection device may be structurally enhanced with focus on impact protection. The configuration of the side impact protection device may thus be less complex. The side impact protection device can thus be designed way easier with better handling of impact forces. The inside does not need to have components of a release mechanism to release it from the seat.

According to an embodiment, the locking mechanism comprises a release portion operable by a user and configured to transfer the locking mechanism to the second configuration. The release portion may be configured for receiving a pushing force from a user. For example, the release portion may be a pushbutton or work like a pushbutton. In some embodiments, the release portion may be provided as a separate member which is operatively coupled to other members of the locking mechanism that establish or release a locking of the side impact protection device on the receiving portion. In other embodiments, the release portion may be an integral part of a member for establishing locking of the side impact protection device, for example of a locking member as will be described below.

In another embodiment, the locking mechanism comprises a locking member movable between a locking position and an unlocking position. In the locking position detaching of the side impact protection device from the receiving portion is blocked. In the unlocking position, the side impact protection device can be detached from the receiving portion. The locking member may be configured to engage with the side impact protection device. The locking member may be configured to interlock with the side impact protection device. The locking member may be configured to be moved into a disengagement path of the side impact protection device for blocking a movement of the side impact protection device in detaching direction. The detaching direction may be a direction in which the side impact protection device is moved along the child seat, for example towards the rear side of the child seat.

According to an embodiment, the locking member is movable between an extended position corresponding to a locking position and a retracted position corresponding to an unlocking position. In the extended position, a locking portion of the locking member may protrude from the child seat, for example from the receiving portion or from an outer surface of a seat body of the child seat. In the extended position, the locking portion may protrude into the receiving portion, for example into a recess or from a bottom surface of a recess defined in the receiving portion. In the retracted position or unlocking position, the locking portion is retracted, for example retracted into the child seat. The release portion may be integrally formed with the locking member and/or may be provided on a free end portion of the locking member. In addition or alternatively, the locking member may be biased towards the locking position by an urging member, for example by a spring.

The locking mechanism may be configured such that the locking member can be held in the unlocking position. The locking mechanism may comprise an arresting portion movable between an arresting position and a release position. In the arresting position, the arresting portion arrests the locking member in the unlocking position. In the release position, the arresting portion may be disengaged and the locking member is free to move to the locking position. The arresting portion may be biased towards the arresting position by means of an urging member, for example by a spring.

The locking mechanism may comprise a force application portion. The force application portion may be operatively coupled to the arresting portion. The force application portion may be configured to receive a pushing force from the side impact protection device upon inserting the side impact protection device into the receiving portion.

The receiving portion may comprise an engaging opening. The engaging opening may be configured to receive an engaging portion of the side impact protection device. The force application portion may be arranged in or may be accessible through the engaging opening. The force application portion may be configured as a closure for closing the engaging opening and may be configured to completely fill the engaging opening. The force application portion may be configured to create a substantially flush transition between the same and an adjacent surface in which the engaging opening is provided when the force application portion is in a standby position in which no force is applied thereon by the side impact protection device.

Further disclosed is a side impact protection device for a child seat, for example a child seat with one or more of the features described above. The side impact protection device comprises a coupling portion and a force absorbing portion.

The coupling portion is configured to be coupled to a receiving portion provided on the child seat, for example to the receiving portion as described in connection with the above child seat. The coupling portion may comprise at least one engaging portion engageable with a receiving portion, for example the receiving portion as described before in connection with the child seat. At least one engaging portion of the coupling portion may be a protrusion or may be a recess. Accordingly, the coupling portion may be configured to be engaged with a receiving portion or the receiving portion may be configured to be engaged with the coupling portion. At least one engaging portion may protrude from a lateral side of the coupling portion.

The rear side of the coupling portion may be configured as an abutment portion for contacting a member of the locking mechanism, for example the locking member as described before in connection with the child seat. The coupling portion may comprise a recess in the rear side. The recess may be configured to at least partially receive the member of the locking mechanism, for example the locking member, when the side impact protection device is positioned in a mounted position on the receiving portion.

In general, the coupling portion may be configured to be coupled to and to be decoupled from a receiving portion on the child seat. Each engaging portion of the coupling portion of the side impact protection device may be a stationary portion. Accordingly, the side impact protection device may have a construction without any movable parts, in particular without parts that can move other than through material deformation.

The force absorbing portion is configured to receive an impact force and to deform under load. The force absorbing portion extends from the coupling portion in a first direction and comprises a force receiving portion provided on a free end portion of the force absorbing portion. The force receiving portion is configured for receiving the impact force. The first direction may be a direction facing away from a child seat on which the side impact protection device is mounted. The first direction may be a direction which is inclined with respect to or is substantially perpendicular to a front rear direction of the child seat.

In some configurations, the force absorbing portion may be configured to promote bending of the force absorbing portion in a second direction which is cross to the first direction, upon application of an impact force on the force receiving portion. The second direction may coincide with a rear direction of the child seat when the side impact protection device is mounted on the child seat. Accordingly, the side impact protection device may be configured such that the force absorbing portion folds sideways, for example backwards, on the child seat when an impact force is applied on the force receiving portion, for example by a contact of the vehicle door with the force receiving portion. Accordingly, a side impact protection device with a construction that allows a controlled collapsing and/or force absorption and/or force distribution may be provided.

The coupling portion may comprise one engaging portion that protrudes from the forward side of the coupling portion or in forward direction of the coupling portion. Such an engaging portion may protrude in a third direction which is opposite to the before described second direction.

The force absorbing portion may comprise a stiffening structure in which the resistance against deformation is reduced along or in the second direction, in particular from a forward end portion to a rearward end portion of the force absorbing portion when the same is mounted on a child seat. Accordingly, the force absorbing portion may be configured such that the compressibility in first direction of the same is increased in the second direction. Accordingly, a rearward or rear portion of the force absorbing portion may be configured such that it may be compressed easier compared to a forward or front portion of the force absorbing portion. In this way, a sideways movement of the force receiving portion in the second direction is promoted or induced when the force absorbing portion is compressed by an impact force acting on the force receiving portion towards the coupling portion and towards the child seat to which the side impact protection device is mounted.

The force absorbing portion may comprise a stiffening structure in which the resistance against deformation is reduced along the first direction towards the force receiving portion. Accordingly, the force absorbing portion may be configured such that the resistance against deformation decreases from the coupling portion to the force receiving portion. A change of the resistance or stiffness in the first direction and/or the second direction may be at least partially provided stepwise and/or partially continuously.

The force absorbing portion may comprise at least two absorbing sections. Each absorbing section may provide a different stiffness in the first direction or against deformation in the first direction. The absorbing sections may be arranged on each other in the first direction. At least one absorbing section may comprise a stiffening structure having reinforcing ribs.

In some configurations, the side impact protection device may comprise a first absorbing section, a second absorbing section, and a third absorbing section. The first absorbing section can be closest to the force receiving portion. The third absorbing section may be closest to the coupling portion. The second absorbing section may be provided between the first absorbing section and the third absorbing section.

A dimension of the second absorbing section in the first direction may at least partially reduce in the second direction. For example, the second absorbing section may become thinner in the second direction. A dimension of the third absorbing section in the first direction may at least partially reduce in the second direction. For example, the third absorbing section may become thinner in the second direction.

A dimension of the second absorbing section in the first direction may be partially constant in the second direction. For example, the second absorbing section may comprise a section extending in second direction and having a constant thickness. A dimension of the third absorbing section in the first direction may be partially constant in the second direction. Accordingly, the third absorbing section may comprise a section extending in second direction and having a constant thickness.

The second absorbing section may comprise a trough shaped portion extending in first direction and open in second direction. The third absorbing section may comprise a trough shaped portion extending in first direction and open in second direction. The third absorbing portion may comprise a rib structure. The rib structure may be a cross rib structure. The rib structure may be provided in the trough shaped portion. The trough shaped portion may comprise a U-shape.

In some configurations, the side impact protection device comprises a multipart configuration. The side impact protection device may comprise a first member and the second member. The second member may at least partially be received in the first member. The second member and the first member may at least partially jointly form the absorbing portion. The second member and the first member may at least partially jointly form the coupling portion.

The second member may define or may comprise the stiffening structure in the at least one absorbing section, for example the at least one absorbing section comprising reinforcing ribs.

The first member may be configured as a covering for covering the second member. The force receiving portion may be provided on the first member at a distance from the second member. In addition or alternatively, the first member may be cup-shaped. In addition or alternatively, the first member comprises an opening for receiving the second member. The first member may be made from a material having a stiffness that is lower than the stiffness of the material of the second member. At least the first member may be made from a material that is flexible and/or cannot break upon deforming the same.

The side impact protection device may comprise an L-shape. The side impact protection device may comprise a base portion with a supporting section that protrudes on one side of the side impact protection device in the second direction. The force absorbing portion may extend from the base portion, for example in a direction which is substantially perpendicular to an extension direction of the supporting section. The force absorbing portion may be configured to fold towards the supporting section.

Other features of the present invention will be apparent from consideration of the information contained above as well as in or in combination with the following detailed description, drawings and claims. The present invention is illustrated by way of example, and not by way of limitation, in the figures of the accompanying drawings.

### BRIEF DESCRIPTION OF THE DRAWINGS

The accompanying drawings, which are incorporated herein and form part of the specification, illustrate possible configurations of embodiments and, together with the description, further serve to explain the principles of the embodiments and to enable a person skilled in the art to make and use the embodiments. It is noted that the same or similar parts in the different figures are denoted by the same reference signs.
Fig. 1 shows a schematic view on a child seat according to an embodiment mounted on a rear seat of a vehicle.
Fig. 2 shows a perspective view on a side impact protection device according to an embodiment.
Fig. 3 shows an enlarged view on a receiving portion according to an embodiment, for receiving a side impact protection device.
Fig. 4 shows the receiving portion of Fig. 3 with a side impact protection device partially contacting and covering the receiving portion.
Fig. 5 shows a side impact protection device locked in the receiving portion.
Fig. 6 shows a configuration in which the side impact protection device is removed from the receiving portion but in which the receiving portion is shown as if the side impact protection device is inserted therein.
Fig. 7 shows a sectional view through a receiving portion and a side impact protection device according to an embodiment, wherein the side impact protection device is positioned at an unlocking position.
Fig. 8 shows a sectional view through a receiving portion and a side impact protection device similar to Fig. 7 wherein the side impact protection device is moved to an intermediate position in locking direction.
Fig. 9 shows a sectional view through a receiving portion and a side impact protection device similar to Figs. 7 and 8 wherein the side impact protection device is positioned in a locking position.
Fig. 10 shows a sectional view of a side impact protection device according to an embodiment.
Fig. 11 shows an exploded view of the side impact protection device according to Fig. 10.
Fig. 12 shows a deformation behavior of the side impact protection device.

All figures are only schematic depictions of exemplary embodiments in which, in particular, distances and dimensional correlations are not presented to scale.

The features and advantages of embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION

The following detailed description is merely exemplary in nature and is not intended to limit application and uses. Furthermore, there is no intention to be bound by any theory presented in the preceding background or summary or the following detailed description.

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Spatially relative terms, such as "beneath," "below," "lower," "above," "on," "upper," "opposite" and the like, may be used herein for ease of description to describe one element or feature's relationship to another element(s) or feature(s) as illustrated in the figures. The spatially relative terms are intended to encompass different orientations of the device in use or in operation in addition to the orientation depicted in the figures. The apparatus may be otherwise oriented (e.g., rotated 90 degrees or at other orientations) and the spatially relative descriptors used herein may likewise be interpreted accordingly.

Terms describing parts or members as "releasable" and/or "detachable" relate to configurations in which the parts or members are at least decouplable from another part or member without destroying one of the cooperating parts or members. These terms may also describe configurations in which the parts and members may be decoupled or disengaged without tools (tool-free). Terms describing parts or members as "positively locked" and/or "positively coupled" relate to configurations in which the parts or members are in positive engagement, positive mechanical engagement or interlocked.

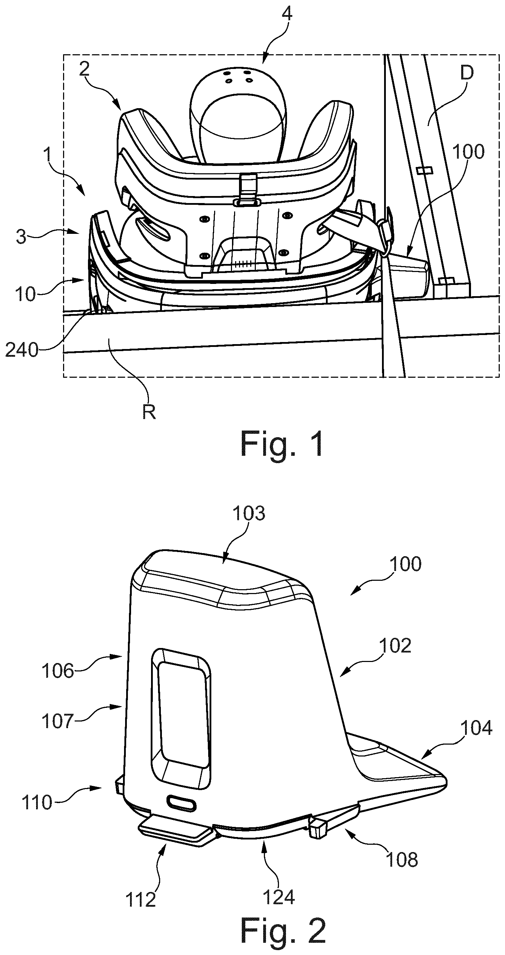

An example child seat 1 is shown in Fig. 1. The child seat 1 comprises a seat body 3 and a headrest 2 coupled to the seat body 3. A child 4 is seated in the seat body 3 with its head positioned in the headrest 2. The child seat 1 is configured to be mounted on a vehicle seat of a motor vehicle. In Fig. 1, the child seat 1 is supported against a backrest R of the vehicle seat next to a vehicle door D.

The child seat 1 comprises a side impact protection device 100 on the side of the vehicle door D. The side impact protection device 100 is configured to at least partially absorb an impact force applied thereon by the vehicle door D in a side crash. The side impact protection device 100 may be configured to deform such that it bends rearwards towards the backrest or rear of the child seat upon application of a force on the same. Examples of side impact protection devices will be described later in greater detail.

The child seat 1 comprises a receiving portion 10. The receiving portion 10 is configured for an attachment of a side impact protection device 100 thereto. The receiving portion 10 according to the embodiment is configured such that a side impact protection device 100 can be releasably attached to the same. A side impact protection device 100 attached to the receiving portion 10 may be released using a release portion 240 provided on the child seat 1. The release portion 240 may be configured to unlock or disengage a side impact protection device 100. For example, the release portion 240 may be configured such that an interlocking between an attached side impact protection device 100 is release so that the side impact protection device 100 can be removed from the receiving portion 10. The child seat 1 according to the embodiment comprises two receiving portions 10, one on the left side and one on the right side of the child seat 1. In this way, the side impact protection device 100 can be attached to the side of the child seat 1 that is closest to a vehicle door D.

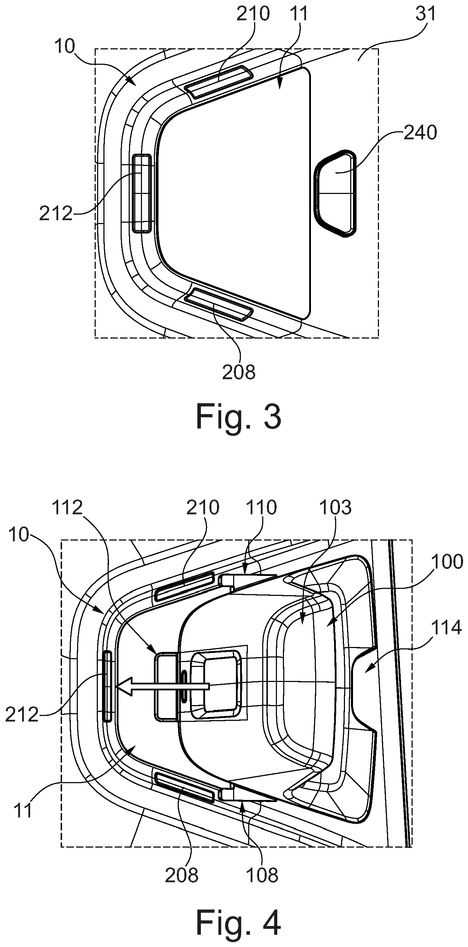

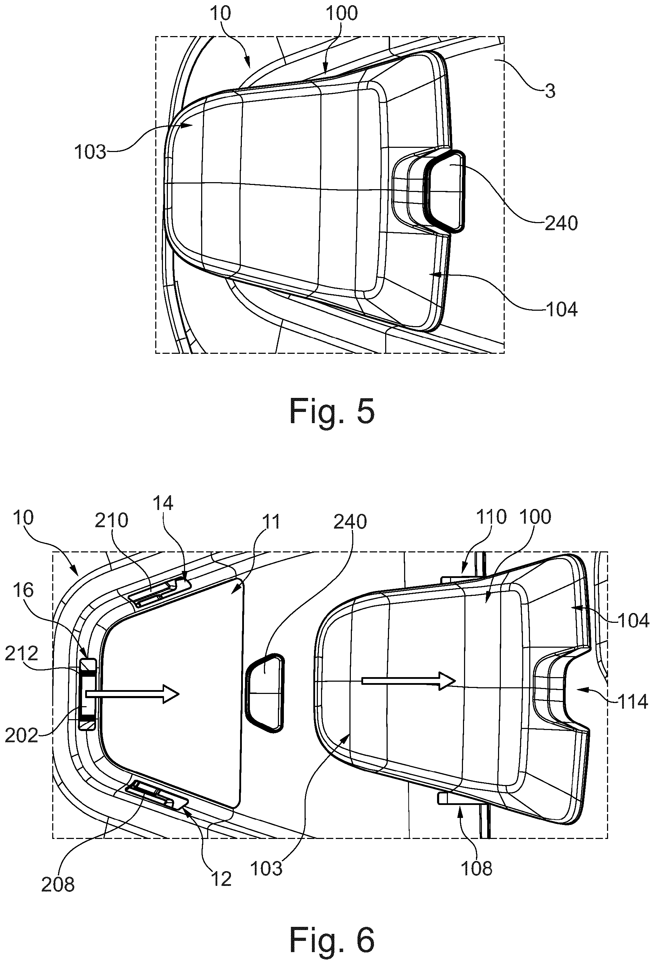

A receiving portion 10 according to an embodiment is shown in Fig. 3. The receiving portion 10 comprises a supporting surface 11. The supporting surface 11 may be a portion of an outer surface 31 of the seat body 3. The side impact protection device 100 may be configured to be supported on the supporting surface 11 in surface contact. Accordingly, an impact force exerted on the side impact protection device 100 can be transferred on the child seat 1 and distributed via the supporting surface 11. The receiving portion may be formed as a recess. Wall portions limiting the recess may comprise openings 12, 14, 16, as for example indicated in Fig. 6.

Each of the openings 12, 14, 16 may be configured to receive an engaging portion 108, 110, 112 of the side impact protection device 100. Fig. 4 shows an embodiment of a side impact protection device 100 which comprises three protrusions 108, 110, 112 as engaging portions. A first protrusion 108 and a second protrusion 110 are provided on opposite lateral sides of the side impact protection device 100. A third protrusion 112 is provided on a forward side of the side impact protection device 100. At least one of the protrusions may be configured as a tab. The protrusions are configured to be received in the openings 12, 14, 16. The protrusions are provided on a coupling portion 104 of the side impact protection device 100. With the protrusions engaged with the openings, the side impact protection device 100 is interlocked with the receiving portion 10 such that it cannot come off from the receiving portion 10 in a direction perpendicular to the supporting surface 11. The openings 12, 14, 16 and the protrusions are provided such that the protrusions may engage with the openings 12, 14, 16 by sliding the side impact protection device 100 along the supporting surface 11 until the protrusions enter the openings 12, 14, 16. The position in which the protrusions are fully inserted into the openings 12, 14, 16 may also be referred to as locking position of the side impact protection device 100.

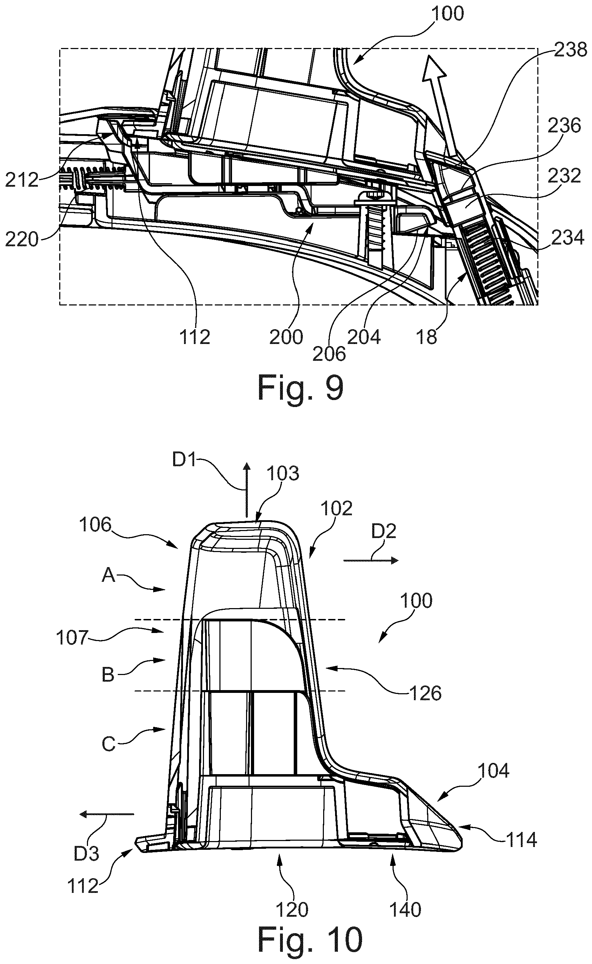

In order to prevent a movement of the side impact protection device 100 in opposite direction to the insertion direction, the receiving portion 10 may comprise a locking mechanism 200. The locking mechanism comprises a locking member 232. In the shown embodiment, the locking member 232 is configured to move to a locking position as shown in Fig. 9 as soon as the side impact protection device 100 reaches the locking position. The locking position is a position in which the locking member 232 protrudes into the receiving portion 10 and/or protrudes from the supporting surface 11. In the locking position, the locking member 232 may engage with the side impact protection device 100. For example, the locking member 232 may be configured to engage with the side impact protection device 100 such that the side impact protection device 100 is additionally held on the supporting surface 11. For example, the locking member 232 may be configured such that at least a portion thereof is located on a portion of the side impact protection device 100 such that a portion of the side impact protection device 100 is arranged between the locking member 232 and the supporting surface 11.

The locking member 232 may be translatory movably guided in the child seat 1. For example, the locking member 232 may be slidably held in a guide 230. The guide 230 may comprise an accommodating recess. The locking member 232 can be an elongate member. The locking member 232 can comprise a blocking portion 238 provided at a first end portion of the locking member 232. The blocking portion 238 may be a portion of the locking member 232 which is configured to contact or engage with the side impact protection device 100 when the locking member 232 is in the locking position or is at least configured to protrude into a disengaging path of the side impact protection device 100 such that the side impact protection device 100 is blocked from moving in disengaging direction. In general, the blocking portion 238 forms a stop against which the side impact protection device 100 abuts when trying to move the same in the disengaging direction. The locking member 232 may be biased towards the locking position by means of an urging member 234. In the shown configuration, the urging member 234 is a spring. The locking member 232 may be guided along a straight path which is inclined with respect to the insertion direction of the side impact protection device 100 in which the side impact protection device 100 is moved for engaging the same with the openings 12, 14, 16 of the receiving portion 10.

As already mentioned before, a release portion 240 may be provided for releasing the locking of the side impact protection device 100. The release portion 240 can be operatively coupled to the locking member 232. In the present embodiment, the release portion 240 and the locking member 232 are integrally formed. More precisely, the release portion 240 is provided in the upper portion of the locking member 232. Accordingly, a user may apply a pushing force on the release portion 240 for moving the locking member 232 to a release position.

In order to facilitate an insertion of the side impact protection device 100 into the receiving portion 10, the locking mechanism 200 may comprise an arresting portion 204. The arresting portion may be movable between an arresting position and a release position. In the arresting position, the arresting portion 204 arrests the locking member 232 in the unlocking position. In the release position, the locking member 232 is free to move to the locking position. The arresting portion 204 may be biased towards the arresting position, for example by means of an urging member 220. The arresting portion 204 may comprise a contact surface 206. The locking member 232 may comprise a contact surface 236 which is configured to be contacted by the contact surface 206 of the arresting portion 204.

The arresting portion 204 may be configured to move to the release position upon moving the side impact protection device 100 along the supporting surface 11 to the locking position.

The locking mechanism 200 may comprise a force application portion 208, 210, 212. In the embodiment, the locking mechanism 200 comprises three force application portions. However, a different number of force application portions may be provided. Each force application portion 208, 210, 212 may be configured to receive a pushing force from the side impact protection device 100 upon inserting the side impact protection device 100 into the receiving portion 10. Each force application portion 208, 210, 212 may be configured for receiving the pushing force from engaging portions 108, 110, 112 of the side impact protection device. At least one, for example each, force application portion 208, 210, 212 may be biased, for example by means of an urging member 220 such as a spring, towards a standby position in which the force application portion 208, 210, 212 rests when no force is applied thereon. As is shown in the embodiment, the force application portions 208, 210, 212 may be configured such that they are positioned in the openings 12, 14, 16 when in the standby position. The force application portions 208, 210, 212 may be configured such that they are substantially flush with the wall surface limiting the receiving portion 10, in particular flush with the wall in which the openings 12, 14, 16 are provided. In other words, the force application portions 208, 210, 212 may be configured as a closure for the respective engaging openings 12, 14, 16. The force application portions 208, 210, 212 may be configured to completely fill the respective engaging opening 12, 14, 16 and to provide a substantially seamless transition between the force application portions 208, 210, 212 and an adjacent wall portion of the receiving portion 10. In some configurations, the force application portion 208, 210, 212 is arranged in or is accessible through an engaging opening 12, 14, 16. The force application portion 208, 210, 212 may be biased towards the standby position by a force which is high enough to move the side impact protection device 100 out of the locking position if it is not blocked by the locking member 232.

The force application portions 208, 210, 212 may be operatively coupled to each other. Furthermore, one or more force application portions 208, 210, 212 may be operatively coupled to the arresting portion 204. In such a configuration, a single urging member 220 may bias the force application portions 208, 210, 212 and the arresting portion 204. The force application portions 208, 210, 212 and the arresting portion 204 may be provided on a shiftable or slidable carrier 202 of the locking mechanism. Accordingly, a force received by the force application portions 208, 210, 212 from the side impact protection device 100, in particular from the engaging portions, is in such a configuration transferred to the arresting portion 204 so that a movement of the force application portions 208, 210, 212 leads to a movement of the arresting portion 204.

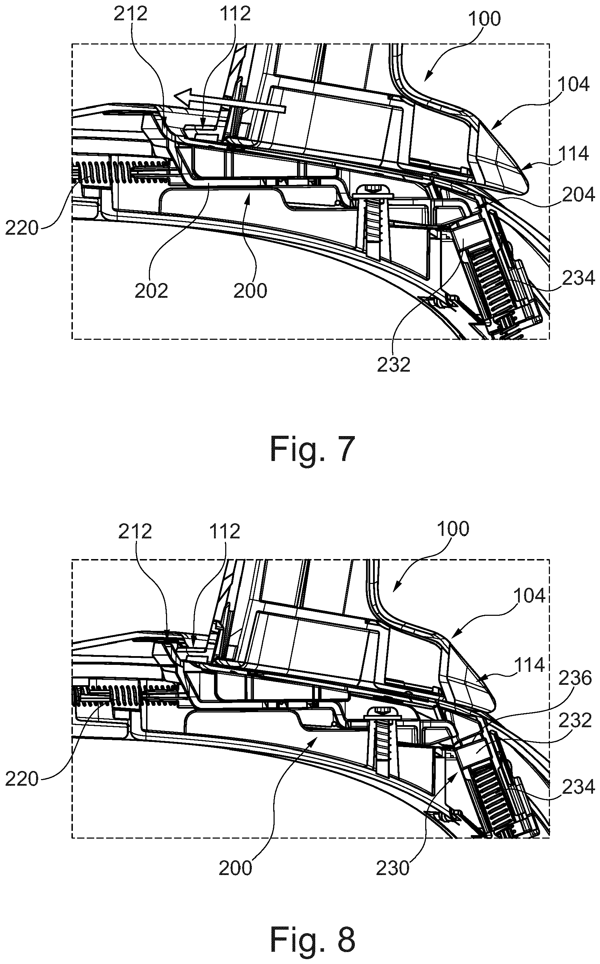

A method of attaching the side impact protection device 100 to the receiving portion 10 will be described with reference to the figures. As is shown in Fig. 7 and Fig. 4, the side impact protection device 100 is first brought into contact with the supporting surface 11 and is then moved along the supporting surface 11 in the locking direction as is indicated by the arrow shown in Fig. 7 and in Fig. 4. In the configuration shown in Fig. 7 and in Fig. 4, the force application portions 208, 210, 212 are in the standby position in which no force is applied thereon and the arresting portion 204 is in the arresting position in which it blocks the locking member 232 in a retracted position or release position.

Fig. 8 shows a state in which the side impact protection device 100 was moved further in the locking direction. The forward engaging portion 112 is in contact with the force application portion 212 and already slightly moved the force application portion 212 out of the standby position. Since the force application portion 212 and the arresting portion 204 are operatively coupled, the arresting portion 204 is correspondingly moved. The locking member 232 is now in a position in which it is not blocked by the arresting portion 204 anymore but is prevented from moving towards the locking position by a lower portion or base potion 124 of the side impact protection device 100.

Fig. 5 and Fig. 9 shows a state in which the side impact protection device 100 is positioned in the locking position in which the engaging portion 112 is fully inserted in the corresponding opening 16. Furthermore, the side impact protection device 100 is no longer blocking the movement of the locking member 232 and the locking member 232 is moved to the locking position. In the state of Fig. 9, the side impact protection device 100 is securely locked on the receiving portion 10.

In order to disengage the side impact protection device 100 from the receiving portion 10, a user may push the locking member 232 towards the unlocking position by applying a force on the release portion 240. The release portion 240 may be a surface portion on the free end of the locking member 232. As soon as a user sufficiently moved the locking member 232 towards the unlocking position against the urging force of the urging member 234, the side impact protection device 100 may be moved in disengaging direction. Moving the side impact protection device 100 in disengaging direction allows the force application portions 208, 210, 212 to move towards the standby position and allows the arresting portion 204 to move to the arresting position in which it arrests the locking member 232 in the unlocking position. Accordingly, the side impact protection device 100 can be removed from the receiving portion 10 in the second direction as shown in Fig. 6 wherein the engaging openings 12, 14, 16 are closed by the force application portions 208, 210, 212 and the locking member 232 is held in a retracted position in which the release portion 240 may be substantially flush with the supporting surface 11 as for example shown in Fig. 4. It is noted that Fig. 6 shows a configuration in which the force application portions 208, 210, 212 are not shown in the standby position in order to illustrate their position when the side impact protection device 100 is fully inserted in the receiving portion 10.

An embodiment of a side impact protection device 100 that can be mounted on the receiving portion 10 will be described with reference to Fig. 1, Fig. 2, Fig. 10, Fig. 11 and Fig. 12.

The side impact protection device 100 comprises a coupling portion 104 and a force absorbing portion 107.

The coupling portion 104 is configured to be coupled to the receiving portion 10 provided on the child seat 1. The coupling portion 104 may comprise at least one engaging portion 108, 110, 112 engageable with the receiving portion 10. In the embodiment of Fig. 2, the coupling portion 104 comprises three engaging portions 108, 110, 112. The engaging portions may be protrusions. As already mentioned before, the engaging portions may be configured to engage with engaging openings 12, 14, 16 in the receiving portion 10. Although not shown in the drawings, it is noted that a configuration is possible in which the openings are provided on the side impact protection device and protrusions are provided on the receiving portion.

One engaging portion 112 may protrude from the forward side of the coupling portion 104. Two engaging portions 108, 110 may protrude from opposite lateral sides of the coupling portion 104. On a rear side of the coupling portion 104, an abutment portion for contacting the locking member 232 may be provided. The abutment portion may comprise a recess 114, 122. The coupling portion 104 may comprise the recess 114, 122 in the rear side thereof as for example best seen in Fig. 4, Fig. 6 and Fig. 11. The recess 114 may be configured to at least partially receive the locking member 232. The recess 114 may be U-shaped.

The force absorbing portion 107 is configured to receive an impact force and to deform under load. The force absorbing portion 107 extends from the coupling portion 104 in a first direction D1. The force absorbing portion 107 comprises a force receiving portion 103 provided on a free end portion 106 of the force absorbing portion 107 and configured for receiving an impact force. The force absorbing portion 107 may be configured to promote bending of the force absorbing portion 107 in a second direction D2 cross to the first direction D1 upon application of an impact force on the force receiving portion 103.

The force absorbing portion 107 may comprise a stiffening structure 126 in which the resistance against deformation is reduced along the second direction D2. The force absorbing portion 107 may comprise a stiffening structure 126 in which the resistance against deformation is reduced along the first direction D1 towards the force receiving portion 103. The force absorbing portion 107 may comprise at least two absorbing sections A, B, C. Each absorbing section may provide a different stiffness in the first direction D1. The absorbing sections may be arranged on each other in the first direction D1. At least one absorbing section B, C may comprise a stiffening structure 126 having reinforcing ribs 128, 130. Further reinforcing ribs 132 may be provided in the supporting section 140 of the base portion 124.

As best seen in Fig. 10, the force absorbing portion 107 according to an embodiment comprises a first absorbing section A, a second absorbing section B, and a third absorbing section C. The first absorbing section A is closest to the force receiving portion 103. The third absorbing section C is closest to the coupling portion 104. The second absorbing section B is provided between the first absorbing section A and the third absorbing section C.

The dimension of the second absorbing section B in the first direction D1 may at least partially reduce in the second direction D2. A dimension of the third absorbing section C in the first direction D1 may at least partially reduce in the second direction D2. The dimension of the second absorbing section B in the first direction D1 may be partially constant in the second direction D2. The dimension of the third absorbing section C in the first direction D1 may be partially constant in the second direction D2.

In an embodiment, the second absorbing section B comprises a trough shaped portion extending in first direction D1 and open in the second direction D2. In another embodiment, the third absorbing section C comprises a trough shaped portion extending in first direction D1 and open in second direction D2. In a further embodiment, the second absorbing section B and the third absorbing section C both comprise a trough shaped portion extending in first direction D1 and open in second direction D2. The trough shaped portion of the third absorbing section C and the trough shaped portion of the second absorbing section B may be integrally formed. The coupling portion 104 may be configured to close the trough shaped portion at one longitudinal end.

The third absorbing section C may comprise a rib structure 130. The second absorbing section B may comprise a rib structure. The rib structure 130 of the third absorbing section C may be a cross rib structure in which ribs may meet each other with an inclination with respect to each other. The rib structure 130 may be provided in the trough shaped portion described before.

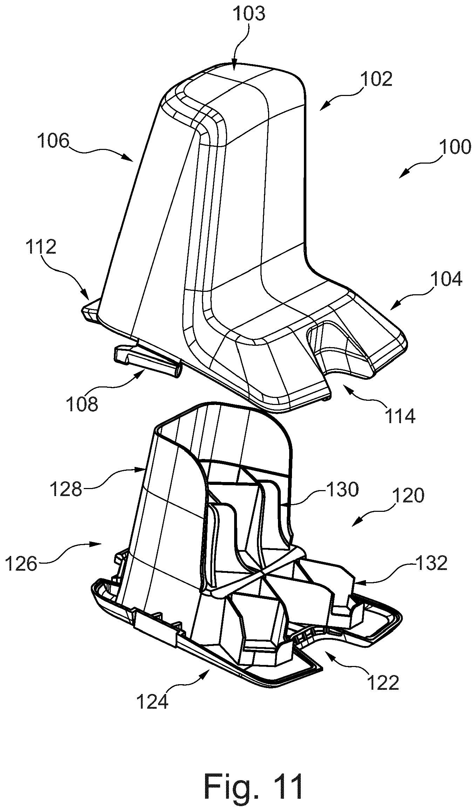

As best seen in Fig. 11, the side impact protection device 100 may comprise a multipart configuration with a first member 102 and a second member 120. The second member 120 can be at least partially received in the first member 102. The second member 120 can be fixedly attached to the first member 102, for example by a suitable fastening member or fastening method such as bonding. The second member 120 and the first member 102 may at least partially jointly form the force absorbing portion 107. In addition or alternatively, the second member 120 and the first member 102 can at least partially jointly form the coupling portion 104.

The second member 120 may define the stiffening structure in at least one absorbing section comprising the reinforcing ribs and/or the trough shaped portion. The second member 120 may comprise or define the trough shaped portion which is positioned in the third absorbing section C and the second absorbing section B when the second member 120 is inserted in the first member 102. The second member 120 may further comprise the rib structure 130. Accordingly, the side impact protection device 100 may be configured such that the stiffness is mainly provided by the second member 120.

The first member 102 may be configured as a covering for covering the second member 120. The first member 102 can be made from or comprise a material that is softer or has a lower stiffness than the second member 120. The force receiving portion 103 may be provided on the first member 102 at a distance from the second member 120. In other words, a free end portion of the second member 120 on the side of the force receiving portion 103 is spaced from the force receiving portion 103. The first member 102 may be cup-shaped. A free end portion of the first member 102 may define the first absorbing section A. In addition or alternatively, the first member 102 may comprise an opening for receiving the second member 120. In general, the side impact protection device 100 may be configured such that the second member 120 is plugged into the first member 102.

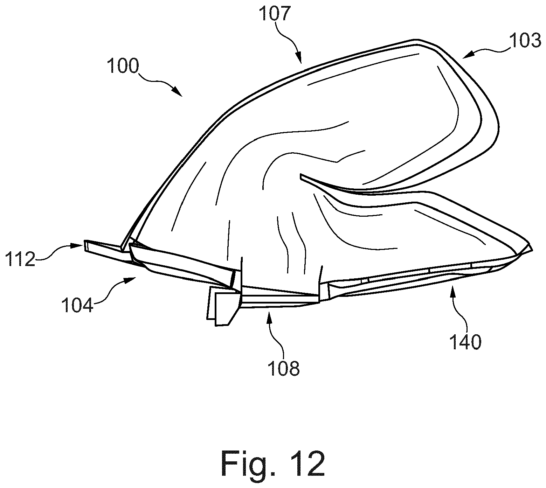

The side impact protection device 100 may comprise a base portion 124 having a supporting section 140 protruding on one side of the side impact protection device 100 in the second direction D2 which may be a rearward direction. The third protrusion 112 may protrude from the side impact protection device 100 in a third direction D3 opposite to the second direction D2. The third direction D3 may correspond to an insertion direction of the side impact protection device 100 into the receiving portion 10. The side impact protection device 100 may comprise an L-shape. The force absorbing portion 107 may be configured to fold towards the supporting section 140 when a force is applied on the force receiving portion 103. The structure may be such that the force absorbing portion 107 bends sideways (for example in rearward direction when the side impact protection device 100 is mounted on a child seat) with the force receiving portion 103 moving sideways and towards the supporting section 140. Fig. 12 shows a deformation of the side impact protection device 100 resulting from an impact force exerted on the force receiving portion 103. As is shown in that figure, the force absorbing portion 107 is folded towards the supporting section 140.

Some aspects of the present disclosure are defined below. These aspects may form exemplary embodiments of the present disclosure and may be combined with features mentioned in other portions of this specification.
Aspect 1: Child seat (1) for a motor vehicle, said child seat comprising
   a receiving portion (10) configured to couple to a side impact protection device (100), in particular to receive said side impact protection device (100), for example in a positive mechanical locking manner, and
   a locking mechanism (200) transferable between a first configuration in which said locking mechanism (200) blocks a detachment of a side impact protection device (100) inserted in or on said receiving portion (10), and a second configuration in which said side impact protection device (100) can be disengaged from said receiving portion (10).
Aspect 2: Child seat (1) according to aspect 1, wherein said locking mechanism (200) comprises a release portion (240) operable by a user and configured to transfer said locking mechanism (200) to said second configuration, wherein said release portion (240) may be configured for receiving a pushing force from a user.
Aspect 3: Child seat (1) according to aspect 3, wherein said locking mechanism (200) comprises a locking member (232) movable between a locking position in which detaching of said side impact protection device (100) from said receiving portion (10) is blocked, and an unlocking position in which said side impact protection device (100) can be detached from said receiving portion (10), wherein said locking member (232) may be configured to engage with said side impact protection device (100) or to be moved into a disengagement path of said side impact protection device (100) for blocking a movement of said side impact protection device (100) in detaching direction.
Aspect 4: Child seat (1) according to aspect 3, wherein said locking member (232) is movable between an extended position in which a locking portion of said locking member (232) protrudes from or into said receiving portion (10), and a retracted position in which said locking portion is retracted, wherein said release portion (240) may be integrally formed with said locking member (232), and/or wherein said locking member (232) may be biased towards said locking position by an urging member (234).
Aspect 5: Child seat (1) according to aspect 3 or aspect 4, wherein said locking mechanism (200) comprises an arresting portion (204) movable between an arresting position in which it arrests said locking member (232) in said unlocking position and a release position in which said locking member (232) is free to move to the locking position, wherein said arresting portion (204) may be biased towards said arresting position by means of an urging member (220).
Aspect 6: Child seat (1) according to aspect 5, wherein said locking mechanism (200) comprises a force application portion (208, 210, 212) operatively coupled to said arresting portion (204), wherein said force application portion (208, 210, 212) is configured to receive a pushing force from said side impact protection device (100) upon inserting said side impact protection device (100) into said receiving portion (10). Aspect 7: Child seat (1) according to aspect 6, wherein said force application portion (208, 210, 212) is arranged in or is accessible through an engaging opening (12, 14, 16) for receiving said engaging portions (108, 110, 112), wherein said force application portion (208, 210, 212) may be configured as a closure for closing said engaging opening (12, 14, 16) and may be configured to completely fill said engaging opening.
Aspect 8: Side impact protection device (100) for a child seat, for example a child seat (1) according to one of the preceding aspects, said side impact protection device (100) comprising
   a coupling portion (104) configured to be coupled to a receiving portion (10) provided on said child seat (1),
   a force absorbing portion (107) configured to receive an impact force and to deform under load, wherein said force absorbing portion (107) extends from said coupling portion (104) in a first direction (D1) and comprises a force receiving portion (103) provided on a free end portion of said force absorbing portion (107) and configured for receiving said impact force, and
   wherein said force absorbing portion (107) is configured to promote bending of said force absorbing portion (107) in a second direction (D2) cross to said first direction (D1) upon application of an impact force on said force receiving portion (103).
Aspect 9: Side impact protection device (100) according to aspect 8, wherein said force absorbing portion (107) comprises a stiffening structure (126) in which the resistance against deformation is reduced along said second direction (D2).
Aspect 10: Side impact protection device (100) according to one of aspects 8 and 9, wherein said force absorbing portion (107) comprises a stiffening structure (126) in which the resistance against deformation is reduced along the first direction (D1) towards said force receiving portion (103).
Aspect 11: Side impact protection device (100) according to one of aspects 8 to 10, wherein said absorbing portion (107) comprises at least two absorbing sections (A, B, C), said absorbing sections (A, B, C) each providing a different stiffness in the first direction (D1) and arranged on each other in said first direction (D1), wherein at least one absorbing section (B, C) comprises a stiffening structure (126) having reinforcing ribs (128, 130).
Aspect 12: Side impact protection device (100) according to aspect 11, comprising a first absorbing section (A), a second absorbing section (B), and a third absorbing section (C), wherein said first absorbing section (A) is closest to said force receiving portion (103), said third absorbing section (C) is closest to said coupling portion (104) and said second absorbing section (B) is provided between said first absorbing section (A) and said third absorbing section (C).
Aspect 13. Side impact protection device (100) according to aspect 12, wherein a dimension of said second absorbing section (B) and/or of said third absorbing section (C) in the first direction (D1) at least partially reduces in the second direction (D2).
Aspect 14: Side impact protection device (100) according to aspect 12 or aspect 13, wherein a dimension of said second absorbing section (B) and/or of said third absorbing section (C) in the first direction (D1) is partially constant in the second direction (D2).
Aspect 15: Side impact protection device (100) according to one of aspects 12 to 14, wherein said second absorbing section (B) and/or said third absorbing section (C) comprise(s) a trough shaped portion extending in first direction (D1) and open in second direction, wherein said third absorbing section (C) may comprise a rib structure, for example a cross rib structure, provided in said trough shaped portion.
Aspect 16: Side impact protection device (100) according to one of aspects 8 to 15, wherein said side impact protection device (100) comprises a multipart configuration with a first member (102) and a second member (120), wherein said second member (120) is at least partially received in said first member (102), wherein said second member (120) and said first member (102) at least partially jointly form said absorbing portion (107) and/or at least partially jointly form said coupling portion (104).
Aspect 17: Side impact protection device (100) according to aspect 16, wherein said second member (120) defines said stiffening structure in said at least one absorbing section (B, C) comprising said reinforcing ribs as defined in aspects 11 to 16.
Aspect 18: Side impact protection device (100) according to aspect 17, wherein said first member (102) is configured as a covering for covering the second member (120), wherein said force receiving portion (103) is provided on said first member (102) at a distance from said second member (120), and/or wherein said first member (102) is cup-shaped and/or wherein said first member (102) comprises an opening for receiving said second member (120).
Aspect 19: Side impact protection device (100) according to one of aspects 8 to 18, wherein said side impact protection device (100) comprises an L-shape with a base portion (124) having a supporting section (140) protruding on one side of said side impact protection device (100) in the second direction (D2), wherein said force absorbing portion (107) is configured to fold towards said supporting section (140).
Aspect 20: Child seat according to one of aspects 1 to 7 comprising a side impact protection device (100) according to one of aspects 8 to 19,
   wherein said coupling portion (104) may comprise at least one engaging portion (108, 110, 112) engageable with said receiving portion (10), wherein at least one engaging portion may be a protrusion or a recess, or
   wherein one engaging portion (112) may protrude from a forward side of said coupling portion (104), for example in a third direction (D3) opposite to said second direction (D2), and/or wherein at least one engaging portion (108, 110) may protrude from a lateral side of said coupling portion (104), and/or
   wherein a rear side of said coupling portion (104) is configured as an abutment portion for contacting a member of said locking mechanism, wherein said coupling portion (104) may comprise a recess (114) in said rear side, said recess (114) being configured to at least partially receive said member of said locking mechanism when said side impact protection device (100) is positioned in a mounted position on said receiving portion (10).
Aspect 21: Side impact protection device (100) according to one of aspects 8 to 19, wherein said coupling portion (104) may comprise at least one engaging portion (108, 110, 112) engageable with said receiving portion (10), wherein at least one engaging portion may be a protrusion or a recess.
Aspect 22: Side impact protection device (100) according to aspect 21, wherein each engaging portion (108, 110, 112) is stationary.
Aspect 23: Side impact protection device (100) according to aspect 21 or 22, wherein one engaging portion (112) may protrude from a forward side of said coupling portion (104), for example in a third direction (D3) opposite to said second direction (D2).
Aspect 24: Side impact protection device (100) according to one of aspects 21 to 23, wherein at least one engaging portion (108, 110) may protrude from a lateral side of said coupling portion (104).
Aspect 25: Side impact protection device (100) according to one of aspects 8 to 19 and 21 to 24, wherein a rear side of said coupling portion (104) is configured as an abutment portion for contacting a member of said locking mechanism, wherein said coupling portion (104) may comprise a recess (114) in said rear side, said recess (114) being configured to at least partially receive said member of said locking mechanism when said side impact protection device (100) is positioned in a mounted position on said receiving portion (10).
Aspect 26: Side impact protection device (100) according to one of aspects 8 to 19 and 21 to 25, wherein said force application portion (208, 210, 212) is arranged in or is accessible through an engaging opening (12, 14, 16) for receiving said engaging portions (108, 110, 112), wherein said force application portion (208, 210, 212) may be configured as a closure for closing said engaging opening (12, 14, 16) and may be configured so as to be flush with an adjacent surface of said .
Aspect 27: Child seat (1) according to one of aspects 1 to 7 comprising a side impact protection device (100) according to one of aspects 8 to 19 and 21 to 26.

### REFERENCE SIGNS

- 1: child seat
- 2: headrest
- 3: seat body
- 4: child
- 10: receiving portion
- 11: supporting surface
- 12: opening
- 14: opening
- 16: opening
- 18: accommodating recess
- 31: outer surface of seat body
- 100: side impact protection device
- 102: first member
- 103: force receiving portion
- 104: coupling portion
- 106: free end portion
- 107: force absorbing portion
- 108: (lateral) engaging portion
- 110: (lateral) engaging portion
- 112: (forward) engaging portion
- 114: recess
- 122: recess
- 124: base portion
- 126: stiffening structure
- 128: reinforcing rib
- 130: reinforcing rib
- 132: reinforcing rib
- 140: supporting section
- 200: locking mechanism
- 202: carrier
- 204: arresting portion
- 206: contact surface
- 208: force application portion
- 210: force application portion
- 212: force application portion
- 220: urging member
- 230: guide
- 232: locking member
- 234: urging member
- 236: contact surface
- 238: blocking portion
- 240: release portion
- A: (first) absorbing section
- B: (second) absorbing section
- C: (third) absorbing section
- D: vehicle door
- D1: first direction
- D2: second direction/rearward direction
- D3: third direction/forward direction
- R: backrest of vehicle seat

## Claims

1. Child seat (1) for a motor vehicle, said child seat comprising
a receiving portion (10) configured to couple to a side impact protection device (100), in particular to receive said side impact protection device (100), for example in a positive mechanical locking manner, and
a locking mechanism (200) transferable between a first configuration in which said locking mechanism (200) blocks a detachment of a side impact protection device (100) inserted in or on said receiving portion (10), and a second configuration in which said side impact protection device (100) can be disengaged from said receiving portion (10).

2. Child seat (1) according to claim 1, wherein said locking mechanism (200) comprises a release portion (240) operable by a user and configured to transfer said locking mechanism (200) to said second configuration, wherein said release portion (240) may be configured for receiving a pushing force from a user.

3. Child seat (1) according to claim 2,
wherein said locking mechanism (200) comprises a locking member (232) movable between a locking position in which detaching of said side impact protection device (100) from said receiving portion (10) is blocked, and an unlocking position in which said side impact protection device (100) can be detached from said receiving portion (10),
wherein said locking member (232) may be configured to engage with said side impact protection device (100) or to be moved into a disengagement path of said side impact protection device (100) for blocking a movement of said side impact protection device (100) in detaching direction, and
wherein said locking member (232) may be movable between an extended position in which a locking portion of said locking member (232) protrudes from or into said receiving portion (10), and a retracted position in which said locking portion is retracted, and
wherein said release portion (240) may be integrally formed with said locking member (232), and/or wherein said locking member (232) may be biased towards said locking position by an urging member (234).

4. Child seat (1) according to claim 3, wherein said locking mechanism (200) comprises an arresting portion (204) movable between an arresting position in which it arrests said locking member (232) in said unlocking position and a release position in which said locking member (232) is free to move to the locking position, wherein said arresting portion (204) may be biased towards said arresting position by means of an urging member (220).

5. Child seat (1) according to claim 4, wherein said locking mechanism (200) comprises a force application portion (208, 210, 212) operatively coupled to said arresting portion (204),
wherein said force application portion (208, 210, 212) is configured to receive a pushing force from said side impact protection device (100) upon inserting said side impact protection device (100) into said receiving portion (10),
wherein said force application portion (208, 210, 212) may be arranged in or may be accessible through an engaging opening (12, 14, 16) for receiving said engaging portions (108, 110, 112), wherein said force application portion (208, 210, 212) may be configured as a closure for closing said engaging opening (12, 14, 16) and may be configured to completely fill said engaging opening.

6. Side impact protection device (100) for a child seat, for example a child seat (1) according to one of the preceding claims, said side impact protection device (100) comprising
a coupling portion (104) configured to be coupled to a receiving portion (10) provided on said child seat (1),
a force absorbing portion (107) configured to receive an impact force and to deform under load, wherein said force absorbing portion (107) extends from said coupling portion (104) in a first direction (D1) and comprises a force receiving portion (103) provided on a free end portion (106) of said force absorbing portion (107) and configured for receiving said impact force, and
wherein said force absorbing portion (107) is configured to promote bending of said force absorbing portion (107) in a second direction (D2) cross to said first direction (D1) upon application of an impact force on said force receiving portion (103).

7. Side impact protection device (100) according to claim 6, wherein said force absorbing portion (107) comprises a stiffening structure (126) in which the resistance against deformation is reduced along said second direction (D2), and/or wherein said force absorbing portion (107) comprises a stiffening structure (126) in which the resistance against deformation is reduced along the first direction (D1) towards said force receiving portion (103).

8. Side impact protection device (100) according to one of claims 6 or 7, wherein said absorbing portion (107) comprises at least two absorbing sections (A, B, C), said absorbing sections (A, B, C) each providing a different stiffness in the first direction (D1) and arranged on each other in said first direction (D1), wherein at least one absorbing section (B, C) comprises a stiffening structure (126) having reinforcing ribs (128, 130).

9. Side impact protection device (100) according to claim 8, comprising a first absorbing section (A), a second absorbing section (B), and a third absorbing section (C), wherein said first absorbing section (A) is closest to said force receiving portion (103), said third absorbing section (C) is closest to said coupling portion (104) and said second absorbing section (B) is provided between said first absorbing section (A) and said third absorbing section (C).

10. Side impact protection device (100) according to claim 9,
wherein a dimension of said second absorbing section (B) and/or of said third absorbing section (C) in the first direction (D1) at least partially reduces in the second direction (D2),
and/or
wherein a dimension of said second absorbing section (B) and/or of said third absorbing section (C) in the first direction (D1) is partially constant in the second direction (D2),
and/or
wherein said second absorbing section (B) and/or said third absorbing section (C) comprise(s) a trough shaped portion extending in first direction (D1) and open in second direction, wherein said third absorbing section (C) may comprise a rib structure, for example a cross rib structure, provided in said trough shaped portion.

11. Side impact protection device (100) according to one of claims 6 to 10, wherein said side impact protection device (100) comprises a multipart configuration with a first member (102) and a second member (120), wherein said second member (120) is at least partially received in said first member (102), wherein said second member (120) and said first member (102) at least partially jointly form said absorbing portion (107) and/or at least partially jointly form said coupling portion (104).

12. Side impact protection device (100) according to claim 11, wherein said second member (120) defines said stiffening structure in said at least one absorbing section (B, C) comprising said reinforcing ribs as defined in claims 8 to 11.

13. Side impact protection device (100) according to claim 12, wherein said first member (102) is configured as a covering for covering the second member (120), wherein said force receiving portion (103) is provided on said first member (102) at a distance from said second member (120), and/or wherein said first member (102) is cup-shaped and/or wherein said first member (102) comprises an opening for receiving said second member (120).

14. Side impact protection device (100) according to one of claims 6 to 13, wherein said side impact protection device (100) comprises an L-shape with a base portion (124) having a supporting section (140) protruding on one side of said side impact protection device (100) in the second direction (D2), wherein said force absorbing portion (107) is configured to fold towards said supporting section (140).

15. Child seat according to one of claims 1 to 5 comprising a side impact protection device (100) according to one of claims 6 to 14,
wherein said coupling portion (104) may comprise at least one engaging portion (108, 110, 112) engageable with said receiving portion (10), wherein at least one engaging portion may be a protrusion or a recess, or
wherein one engaging portion (112) may protrude from a forward side of said coupling portion (104), for example in a third direction (D3) opposite to said second direction (D2), and/or wherein at least one engaging portion (108, 110) may protrude from a lateral side of said coupling portion (104), and/or
wherein a rear side of said coupling portion (104) is configured as an abutment portion for contacting a member of said locking mechanism, wherein said coupling portion (104) may comprise a recess (114) in said rear side, said recess (114) being configured to at least partially receive said member of said locking mechanism when said side impact protection device (100) is positioned in a mounted position on said receiving portion (10).
